# EUROPÄISCHE PATENTSCHRIFT

(11) **EP 3 250 400 B1**
(45) Veröffentlichungstag und Bekanntmachung des Hinweises auf die Patenterteilung: **13.01.2021**
(21) Anmeldenummer: 16700485.2
(22) Anmeldetag: 14.01.2016
(51) Int. Cl.: B60N 2/68, B60N 2/75, A47C 7/02

(54) **LEICHTBAUSITZ FÜR FAHRZEUGE**
LIGHTWEIGHT SEAT FOR VEHICLES
SIÈGE DE CONSTRUCTION LÉGÈRE POUR VÉHICULES

(30) Priorität: 26.01.2015 DE 102015201237
(43) Veröffentlichungstag der Anmeldung: 06.12.2017
(73) Patentinhaber: Bayerische Motoren Werke Aktiengesellschaft, 80809 München (DE)
(72) Erfinder: MÜLLER, Andreas, 84079 Bruckberg (DE); SEDLMAIER, Marcus, 84109 Wörth/Isar (DE)
(74) Vertreter: Duca, Christian
(86) Internationale Anmeldenummer: PCT/EP2016/050652
(87) Internationale Veröffentlichungsnummer: WO 2016/120080

(56) Entgegenhaltungen:
- WO-A1-2006/102969
- DE-A1- 10 119 807
- US-A- 6 139 109

## Beschreibung

Die Erfindung betrifft einen Leichtbausitz für Fahrzeuge gemäß den Merkmalen von Anspruch 1. Die Erfindung betrifft insbesondere einen Hintersitz für Kraftfahrzeuge mit einem formstabilen vorzugsweise einstückigen Sitzteil mit einer Weichschaumauflage.

Fahrzeugsitze unterliegen wie weitere Bauteile und Einbauten in Fahrzeugen zunehmend der Gewichtsreduzierung bei gleichzeitigem Erhalt der Funktionalität und des Komforts. Ein beispielhafter Fahrzeugsitz ist aus der Patentanmeldung DE 198 45 730 A1 bekannt. Das Polsterteil dieses Sitzes ist als Rückenlehne ausgebildet, die einen Sandwichaufbau aus einem Formschaumteil, einem Weichpolster und einer dazwischen befindlichen Formschale aus Leichtmetall aufweist. Rückseitig ist das Formschaumteil durch ein Rückwandelement abgedeckt. Ein derartiges Polsterteil ist grundsätzlich dazu geeignet, das Gewicht des Fahrzeugs gegenüber Sitzen mit konventionellen Stahlstrukturen zu reduzieren. Allerdings ist der gewählte Aufbau nur für den Einsatz bei Rückenlehnen geeignet und darüber hinaus wegen der verwendeten Metallformschale immer noch relativ schwer.

Aus der DE10354065 B4 ist ein Fahrzeugsitz, insbesondere für ein Kraftfahrzeug bekannt, der aus einem Polsterteil bestehend aus Hartschaumteil und Weichschaumauflage gefertigt ist. Das Polsterteil des Fahrzeugsitzes ist hier als Sitzteil ausgebildet, wobei das Hartschaumteil eine zumindest bereichsweise kongruent zum Fahrzeugboden geformte Oberfläche aufweist, die mit dem Fahrzeugboden in Gebrauchsstellung des Sitzteils in Formschluss bringbar ist, wobei das Sitzteil mittels eines Gelenkmechanismußes aus dem Formschluß lösbar und in eine Nichtgebrauchsstellung verlagerbar ist. Durch eine solche Ausbildung kann auf einen massiven, das Gewicht des Fahrzeuginsassen insbesondere im Crashfall in die Fahrzeugstruktur ableitenden Gelenkmechanismus für das Sitzteil verzichtet werden. Vielmehr werden die Kräfte durch Formschluß unmittelbar vom Hartschaumteil in den Fahrzeugboden übertragen, so dass der Gelenkmechanismus nur der Bewegungsführung des Sitzteils dient. Es ist daher möglich, diesen direkt, also unter Verzicht auf eine im Sitzteil angeordnete metallische Stützstruktur, im Hartschaumteil zu verankern.

Des Weiteren ist nach DE102010024207 A1 ein Rückenlehnen- oder Sitzteil für einen Fahrzeugsitz oder eine Fahrzeugsitzbank, sowie ein Verfahren zu dessen Herstellung bekannt. Die Tragstruktur weist mindestens ein Rahmenelement aus einem faserverstärkten Polypropylen (PP) oder einem faserverstärkten Polyurethan (PUR) und mindestens ein Flächenelement u.a. aus expandiertem Polypropylenschaum (EPP) auf.

Darüber hinaus geht aus der Druckschrift DE102012200441 A1 eine Anbringungsanordnung für einen Fahrzeugsitzrahmen und ein Herstellungsverfahren hervor. Die Fahrzeugsitzanordnung umfasst einen Sitzrahmen, der aus Strukturschaum (expandiertem Polyolefin) besteht.

Weitere Fahrzeugsitze sind beispielsweise aus den Schriften DE 101 19 807 A1, WO 2006/102969 A1 und US 6 139 109 A bekannt.

Bei den im Stand der Technik bekannten Sitzen ist jedoch nachteilig, dass für die unterschiedlichen Funktionen (wie z. B. Sitzfunktion, Haltefunktion, Verankerung der Auflagen, Eigenstabilität und dergleichen) jeweils spezifische Konstruktionsteile oder eigens dafür vorgesehene Anordnungen im Zusammenbau verwendet werden, wie z. B. Sitzrahmen, Rahmenelemente, Gelenkmechanismuss, Verbindungselemente für Sitzauflagen, Schaumauflagen und dergleichen. Da jedes dieser Funktionsteils auch ein Eigengewicht besitzt, sind solche Sitze somit immer noch relativ schwer.

Der Erfindung liegt demnach die Aufgabe zugrunde, vorbesagte Nachteile zu überwinden und einen nochmals gewichtsreduzierten, einfach herzustellenden Fahrzeugsitz bereitzustellen, der eine Vielzahl von Grundfunktionen aufweist.

Diese Aufgabe wird gelöst mit einem Leichtbausitz für Fahrzeuge gemäß den Merkmalen von Patentanspruch 1.

Erfindungsgemäß wird ein Leichtbausitz gemäß den Merkmalen des Patentanspruchs 1 vorgeschlagen.

Grundgedanke der vorliegenden Erfindung ist es, eine spezifische Form aus einem speziellen formstabilen Material vorzugsweise einstückig herzustellen, so dass eine Mehrzahl von Funktionen in dem erfindungsgemäßen Sitzteil integriert sind.

Die Lösung der der Erfindung zugrunde liegende Aufgabe besteht zum einen darin, einen leichtbauoptimierten Hintersitz darzustellen, der hauptsächlich d. h. nahezu vollständig aus einem EPP-Schaum besteht. Der Sitz besteht vorzugsweise aus expandiertem Polypropylen-Partikelschaum (EPP), aus dem sich kostengünstig komplexe dreidimensionale Formteile geringen Gewichts herstellen lassen. Hierdurch kann neben der Stützfunktion des gewählten Materials auch gleichzeitig die Sitzschale, d. h. die gewünschte Sitzkontur in einem Arbeitsgang und in einer finalen Sitzform abgebildet werden. Dieses Konzept differenziert sich von den bekannten Sitzen dadurch, dass anstelle eines konventionellen PUR-Weichschaums ein formstabiler Schaum Verwendung findet.

Wird als formstabiler Schaum, ein EPP-Schaum verwendet, kann der Schaum damit auch die komplette Tragfunktion der Sitzbank übernehmen. So können auch beim Fahren typischerweise auftretende Kräfte unmittelbar z. B. kraftschlüssig in den Sitz geleitet werden. Aufgrund der Formstabilität von EPP-Schaum kann im Vergleich zu Materialkombinationen aus PUR-Schaum, EPP-Schaum und anderen Konstruktionselementen, wie die eines Drahtrahmens vollständig verzichtet werden, was eine signifikante Gewichtseinsparung mit sich bringt.

Ein weiterer Aspekt der vorliegenden Erfindung betrifft den Umstand, dass in dem EPP-Trägerteil bereits die Sitzkonturen vorgeformt bzw. im Trägerteil integriert sind, die optimal an die menschliche Anatomie angepasst sind und somit eine wesentliche Komfortfunktion übernehmen.

Darüber hinaus ist erfinderisch vorgesehen, das EPP-Trägerteil mit einer sehr dünnen Polsterauflage, vorzugsweise konstanter Materialstärke, welche z. B. werkzeuglos hergestellt werden kann, als zusätzliches Komfortelement aufzubringen. So kann zum Beispiel Meterware aus Schnittschaum, Gewirke, Watte oder dergleichen verwendet werden, was neben den Gewichtsvorteilen auch Zeit- und Kostenvorteile in der Herstellung mit sich bringt. Folglich wird kein gesondertes Werkzeug mit einer spezifischen Werkzeugform benötigt, um die Polsterauflage herzustellen. Neben den Gewichtsvorteilen und Kostenvorteilen ist auch die kompaktere Bauweise zu nennen.

Erfindungsgemäß wird daher ein Leichtbausitz für Fahrzeuge, insbesondere für Hintersitze für Kraftfahrzeuge bestehend aus einem Trägerteil vorgeschlagen, wobei das Trägerteil aus einem formstabilen Material hergestellt ist und wenigstens eine Sitzschale für einen Sitznutzer integral aufweist. Für einen Hintersitz werden bevorzugt zwei Sitzschalen vorgesehen.

In einer bevorzugten Ausführungsform der Erfindung ist vorgesehen, dass das formstabile Material nahezu bis vollständig aus einem expandiertem Polypropylen-Partikelschaum(EPP) besteht. So kann mit einer einzigen Werkzeugform der gesamte Sitz (mit Ausnahme einer eventuellen Sitzauflage) hergestellt werden.

Es ist demnach weiter bevorzugt, wenn das Trägerteil im Wesentlichen den gesamten Leichtbausitz ausbildet. So ergeben sich auch Montagevorteile, da ein Zusammenbau von Sitzeinzelteilen nicht erforderlich ist.

Gemäß der Erfindung, ist die wenigstens eine Sitzschale als eine einer Gesäßform korrespondierenden Vertiefung ausgebildet. Anders ausgedrückt, ist die Sitzschalenform bestimmungsgemäß im Werkzeug bereits so ausgebildet, dass die Oberfläche ergonomisch an das Gesäß eines Sitznutzers angepasst ist.

Ferner wird der Sitz durch eine vordere Stirnseite und eine hintere Rückseite (und zwar in Fahrzeuglängsrichtung im Einbauzustand betrachtet) begrenzt und die Vertiefung weist einen zur hinteren Rückseite d. h. nach hinten ansteigenden hinteren Sitzschalenabschnitt auf, der einen Teil der Sitzschalenform bildet.

Erfindungsgemäß ist zudem vorgesehen, dass sich an den hinteren Sitzschalenabschnitt zwei in Richtung der vorderen Stirnseite hin erstreckende Sitzschalenabschnitte anschließen, die in einer Querrichtung zum jeweiligen Rand der Sitzschale hin ansteigen. Durch eine solche Ausgestaltung ergibt sich eine ergonomische Vertiefung zum bequemen Sitzen eines Sitznutzers. Die zuvor beschriebenen Sitzschalenabschnitte bilden insgesamt die Auflagefläche zum Aufbringen eines dünnen Schaumpolsters.

In einer Weiterbildung der vorliegenden Erfindung kann daher vorgesehen sein, dass das Trägerteil vorzugsweise mehrere Haltevorrichtungen zur werkzeuglosen Befestigungsmöglichkeit einer Weichschaumauflage aufweist. Ebenfalls Mit Vorteil ist dabei vorgesehen, dass die Haltevorrichtungen einstückig mit dem Trägerteil z. B. dem EPP-Trägerteil, vorzugsweise im Bereich der Sitzschale(n) ausgebildet sind. Somit ist die Befestigung ebenfalls in das Sitzteil integriert. D.h. es wird z. B. eine Stecklösung bereitgestellt, welche durch das Ausformen von Kanälen und/oder Haken erzeugt wird. Am Sitzbezug sind dann passende Leisten als Gegenhalteelemente angebracht. So kann zum Beispiel eine Polsterauflage mit geeigneten Halteelementen unmittelbar am Trägerteil d. h. an den integrierten Haltevorrichtungen werkzeuglos befestigt werden.

In einer bevorzugten Ausführungsform der Erfindung ist weiter vorgesehen je eine dünne Polsterauflage mit gleichmäßiger Materialstärke in Dickenrichtung auf jeder Sitzschale des Trägerteils vorzusehen. Die Polsterauflage ist bevorzugt entsprechend der Kontur der Sitzschale angepasst und weiter bevorzugt oberhalb der Sitzschalenbereiche angeordnet.

Erfindungsgemäß ist ferner vorgesehen, dass benachbart zu wenigstens einer Sitzschale wenigstens eine Armauflage vom Trägerteil ausgebildet wird. So können auch jeweils benachbart zu jeder Sitzschale rechts und links jeweils eine Armauflage ausgebildet sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:

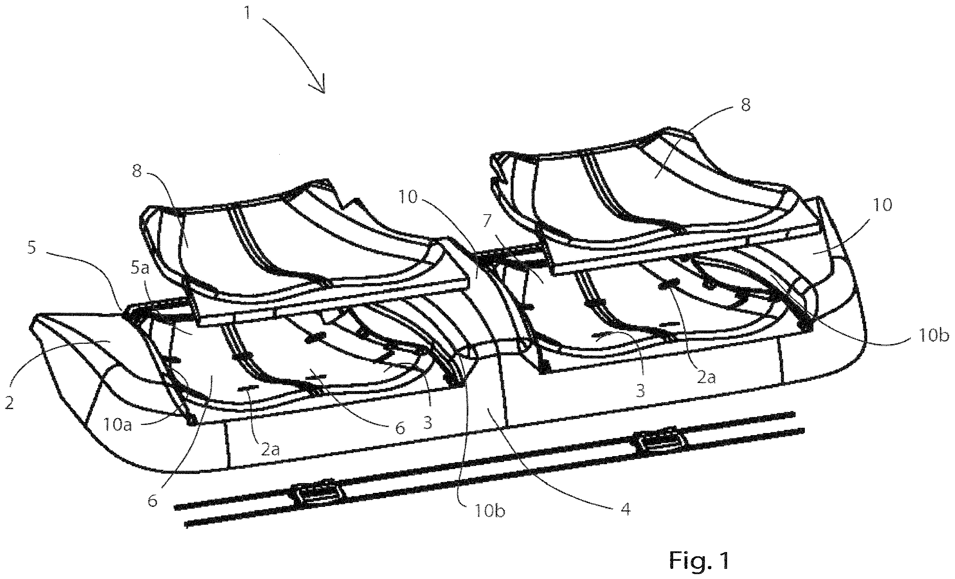

- Fig.1: eine perspektivische Ansicht auf eine beispielhafte Ausführungsform eines erfindungsgemäßen Leichtbausitzes mit zwei Polsterauflagen in einer exponierten d. h. nicht verbundenen Lage darüber dargestellt.

In der Figur 1 ist ein Ausführungsbeispiel eines Sitzes 1 und zwar eines Leichtbausitzes 1 für Fahrzeuge gezeigt. Der dargestellte Sitz stellt einen Hintersitz für ein Kraftfahrzeug bestehend aus einem Trägerteil 2 dar, wobei das Trägerteil 2 aus einem formstabilen Material hergestellt ist. Formstabil im Sinne der vorliegenden Erfindung ist ein Schaum, der sich nicht wie ein Weichschaum zusammendrücken lässt, sondern dem Gewicht eines Sitznutzers standhält ohne, dass er sich merklich verformt. Das hier verwendete formstabile Material besteht vollständig aus einem expandiertem Polypropylen-Partikelschaum (EPP). Ferner ist zu erkennen, dass das Trägerteil 2 im Wesentlichen den gesamten Leichtbausitz 1 (mit Ausnahme der beiden Polsterauflagen 8) ausbildet.

Das Trägerteil 2 weist zwei Sitzschalen 3 für je einen Sitznutzer auf. Die Sitzschalen 3 lassen sich im Wesentlichen in drei Sitzschalenabschnitte 5a, 6 aufteilen. Auf den Sitzschalenabschnitten 5a, 6 sind die Polsterauflagen 8 im (nicht dargestellten) Montagezustand aufgebracht.

Es ist weiter zu erkennen, dass jede Sitzschale 3 als eine einer Gesäßform korrespondierende Vertiefung im Trägerteil 2 ausgebildet ist. Der Sitz wird durch eine vordere Stirnseite 4 und eine hintere Rückseite 5 in Fahrzeuglängsrichtung betrachtet, begrenzt. Die die Sitzschale 3 ausbildenden Vertiefungen weisen den zur hinteren Rückseite 5 nach hinten ansteigenden hinteren Sitzschalenabschnitt 5a auf. Ferner schließen sich an den hinteren Sitzschalenabschnitt 5a zwei in Richtung der vorderen Stirnseite 4 hin erstreckende Sitzschalenabschnitte 6 an. Diese verlaufen in etwa parallel und sind ausgebildet zur Aufnahme des oberen Teils des Oberschenkels. Die beiden Sitzschalenabschnitte 6 steigen in einer Querrichtung (d .h. parallel zur vorderen Stirnseite 4 und zur Rückseite 5 betrachtet) zum jeweiligen Rand 7 der Sitzschale 3 hin an, wodurch sich eine in etwa konkave bzw. bi-konkave Sitzschalenform ergibt.

Das Trägerteil 2 ist ferner mit Haltevorrichtungen 2a zur werkzeuglosen Befestigung der Weichschaumauflagen 8 ausgestattet, wobei die Haltevorrichtungen 2a einstückig mit dem Trägerteil 2 im Bereich der Sitzschalen 3 ausgebildet sind. Je eine dünne Polsterauflage 8 mit einer gleichmäßigen Materialstärke in Dickenrichtung wird mittels der Haltevorrichtungen 2a (an entsprechenden Fixierpunkten) auf jeder Sitzschale 3 des Trägerteils 2 befestigt.

Die Sitzschalen 3 weisen je rechts und links eine Armauflage 10 auf, die ebenfalls einstückig mit dem Trägerteil 2 ausgebildet sind. Die Armauflagen 10 begrenzen gleichzeitig durch Seitenwände 10a, 10b den Sitzschalenbereich seitlich und geben dem Sitznutzer dadurch einen Seitenhalt.

Die Erfindung beschränkt sich in ihrer Ausführung nicht auf die vorstehend angegebenen bevorzugten Ausführungsbeispiele. Vielmehr ist innerhalb der Ansprüche eine Anzahl von Varianten denkbar, welche von der dargestellten Lösung auch bei grundsätzlich anders gearteten Ausführungen Gebrauch macht. So kann neben der Rücksitzbank als solcher z. B. auch die Sitzlehne gemäß der Lehre der vorliegenden Erfindung ausgebildet werden.

## Patentansprüche

1. Leichtbausitz (1) für Fahrzeuge, insbesondere für Hintersitze für Kraftfahrzeuge bestehend aus einem Trägerteil (2),
wobei das Trägerteil (2) aus einem formstabilen Material hergestellt ist und wenigstens eine Sitzschale (3) für einen Sitznutzer integral aufweist,
wobei die wenigstens eine Sitzschale (3) als eine zu einer Gesäßform eines Sitznutzers korrespondierende Vertiefung ausgebildet ist,
wobei der Sitz durch eine vordere Stirnseite (4) und eine hintere Rückseite (5) in Fahrzeuglängsrichtung betrachtet, begrenzt wird und die Vertiefung einen zur hinteren Rückseite (5) nach hinten ansteigenden hinteren Sitzschalenabschnitt (5a) aufweist,
wobei sich an den hinteren Sitzschalenabschnitt (5a) zwei in Richtung der vorderen Stirnseite (4) hin erstreckende Sitzschalenabschnitte (6) zur Aufnahme der Oberschenkel eines Sitznutzers anschließen, die in einer Querrichtung zum jeweiligen Rand (7) der Sitzschale (3) hin ansteigen und jeweils eine konkave Form aufweisen,
wobei beidseitig benachbart zu wenigstens einer Sitzschale (3) je eine Armauflage (10) vom Trägerteil (2) ausgebildet ist, deren Seitenwände (10a, 10b) den Sitzschalenbereich seitlich begrenzen und ausgebildet sind, dem Sitznutzer Seitenhalt zu geben.

2. Leichtbausitz (1) gemäß Anspruch 1, **dadurch gekennzeichnet, dass** das formstabile Material vollständig aus einem expandiertem Polypropylen-Partikelschaum (EPP) besteht.

3. Leichtbausitz (1) gemäß Anspruch 1 oder 2, **dadurch gekennzeichnet, dass** das Trägerteil (2) im Wesentlichen den gesamten Leichtbausitz (1) ausbildet.

4. Leichtbausitz (1) gemäß einem der vorhergehenden Ansprüche, **dadurch gekennzeichnet, dass** das Trägerteil (2) Haltevorrichtungen (2a) zur werkzeuglosen Befestigung einer Weichschaumauflage (8) aufweist.

5. Leichtbausitz (1) gemäß Anspruch 4, **dadurch gekennzeichnet, dass** die Haltevorrichtungen (2a) einstückig mit dem Trägerteil (2), vorzugsweise im Bereich der Sitzschale(n) (3) ausgebildet sind.

6. Leichtbausitz (1) gemäß einem der vorhergehenden Ansprüche, **dadurch gekennzeichnet, dass** je eine dünne Polsterauflage (8) mit gleichmäßiger Materialstärke in Dickenrichtung auf jeder Sitzschale (3) des Trägerteils (2) befestigt ist.

## Claims

1. Lightweight seat (1) for vehicles, in particular for rear seats for motor vehicles, consisting of a carrier part (2),
wherein the carrier part (2) is produced from a dimensionally stable material and has integrally therewith at least one seat shell (3) for a seat user,
wherein the at least one seat shell (3) is designed as a depression which corresponds to a shape of the buttocks of a seat user,
wherein the seat is delimited by a front side (4) and a rear side (5) as viewed in the vehicle longitudinal direction, and the depression has a rear seat shell portion (5a) which rises rearwardly towards the rear side (5),
wherein the rear seat shell portion (5a) is adjoined by two seat shell portions (6) which extend in the direction of the front side (4) for receiving the thighs of a seat user, which seat shell portions (6) rise in a transverse direction towards the respective edge (7) of the seat shell (3) and each have a concave shape,
wherein an armrest (10) is respectively formed by the carrier part (2) on both sides adjacent to at least one seat shell (3), the side walls (10a, 10b) of which armrest naturally delimit the seat shell region and are designed to provide the seat user with lateral retention.

2. Lightweight seat (1) according to Claim 1, **characterized in that** the dimensionally stable material consists completely of an expanded polypropylene particle foam (EPP).

3. Lightweight seat (1) according to Claim 1 or 2, **characterized in that** the carrier part (2) substantially forms the entire lightweight seat (1).

4. Lightweight seat (1) according to one of the preceding claims, **characterized in that** the carrier part (2) has holding devices (2a) for tool-less fastening of a soft foam pad (8).

5. Lightweight seat (1) according to Claim 4, **characterized in that** the holding devices (2a) are formed in one piece with the carrier part (2), preferably in the region of the seat shell(s) (3).

6. Lightweight seat (1) according to one of the preceding claims, **characterized in that** a thin cushion pad (8) with uniform material thickness in the thickness direction is respectively fastened to each seat shell (3) of the carrier part (2).

## Revendications

1. Siège de construction légère (1) pour véhicules, notamment pour sièges arrière pour véhicules automobiles, constitué par une partie de support (2),
la partie de support (2) étant fabriquée en un matériau de forme stable et comprenant sous forme solidaire au moins une coque de siège (3) pour un utilisateur du siège,
ladite au moins une coque de siège (3) étant configurée sous la forme d'un creux correspondant à une forme de postérieur d'un utilisateur du siège,
le siège étant délimité par un côté avant (4) et un côté arrière (5) tel que vu dans la direction longitudinale du véhicule, et le creux comprenant une section de coque de siège arrière (5a) montante vers l'arrière jusqu'au côté arrière (5),
deux sections de coque de siège (6) qui s'étendent dans la direction du côté avant (4) pour la réception des cuisses d'un utilisateur du siège étant contigües à la section de coque de siège arrière (5a), qui montent dans une direction transversale par rapport au bord respectif (7) de la coque de siège (3) et présentent à chaque fois une forme concave,
un accoudoir (10) étant formé par la partie de support (2) des deux côtés en position voisine d'au moins une coque de siège (3), dont les parois latérales (10a, 10b) délimitent latéralement la zone de coque de siège et sont configurées pour fournir un maintien latéral à l'utilisateur du siège.

2. Siège de construction légère (1) selon la revendication 1, **caractérisé en ce que** le matériau de forme stable est entièrement constitué par une mousse particulaire de polypropylène expansé (EPP).

3. Siège de construction légère (1) selon la revendication 1 ou 2, **caractérisé en ce que** la partie de support (2) forme essentiellement l'ensemble du siège de construction légère (1).

4. Siège de construction légère (1) selon l'une quelconque des revendications précédentes, **caractérisé en ce que** la partie de support (2) comprend des dispositifs de maintien (2a) pour la fixation sans outil d'un revêtement de mousse souple (8).

5. Siège de construction légère (1) selon la revendication 4, **caractérisé en ce que** les dispositifs de maintien (2a) sont configurés d'un seul tenant avec la partie de support (2), de préférence dans la zone de la ou des coques de siège (3).

6. Siège de construction légère (1) selon l'une quelconque des revendications précédentes, **caractérisé en ce qu'**un revêtement de rembourrage mince (8) ayant une épaisseur de matériau uniforme est fixé dans la direction de l'épaisseur sur chaque coque de siège (3) de la partie de support (2).
